# EUROPEAN PATENT SPECIFICATION

(11) **EP 4 458 228 B1**
(45) Date of publication and mention of the grant of the patent: **22.10.2025**
(21) Application number: 24178109.5
(22) Date of filing: 24.05.2024
(51) Int. Cl.: A47J 43/042, B01F 33/501, B01F 35/32

(54) **STIRRING DEVICE APPLICABLE TO CONTAINERS**
RÜHRVORRICHTUNG FÜR BEHÄLTER
DISPOSITIF D'AGITATION APPLICABLE À DES RÉCIPIENTS

(30) Priority: 07.09.2023 CN 202322422657 U
(43) Date of publication of application: 06.11.2024
(73) Proprietor: Shenzhen DeOne Innovation Technology Co., Ltd, Shenzhen, Guangdong 518129 (CN)
(72) Inventor: Cai, Jiongjun, Shenzhen, 518129 (CN)
(74) Representative: Plavsa, Olga

(56) References cited:
- EP-A2- 1 987 750
- CN-A- 109 171 388
- CN-B- 104 640 487
- CN-U- 204 520 363
- US-A1- 2018 360 271

## Description

### TECHNICAL FIELD

The present invention relates to the technical field of maternal and child supplies, and in particular to a stirring device applicable to containers.

### BACKGROUND

Currently, a variety of food mixers for maternal and child supplies have appeared on the market. However most of these food mixers have only one-way fast milk churning, so that such milk churning process is fast, but easy to foam and loud noise, its operation is unstable, and slow one-way mixing is likely to lead to uneven and insufficient mixing. Therefore, when existing food mixers are churning, their drive motors often fail to meet high control requirements of churning due to lack of a specialized churning control strategy.

US2018/360271A1 discloses a cooking device capable of processing food with a simple configuration while inhibiting oxidation of food and also inhibiting pressure inside a cooking container from rising excessively.

CN104640487B discloses an apparatus for agitating liquid foodstuff, comprising a whisk that includes a magnetic rotor of a brushless electromotor assembly, and a main body including a liquid foodstuff container in which the whisk is receivable such that it is rotatable around a rotation axis thereof, and a stator of the electromotor assembly.

EP1987750A2 discloses an appliance for warm milk preparation with milk froth consists of a reservoir for the milk, a removable cover with frother and electric circuit opportunely fed and controlled automatically by means of a temperature sensor.

CN109171388A discloses a health water cup comprises a cup body, a cup cover is screwed on the cup body, a timer is arranged on the cup cover, the timer is embedded on the upper surface of the cup cover, a loudspeaker connected with the timer is arranged on the side wall of the cup cover, a detachable fruit box is arranged on the bottom of the cup body, and a water thermometer is arranged on the outer wall of the cup.

### SUMMARY

In view of defects and deficiencies of existing technologies, the present disclosure aims to provide a stirring device applicable to containers, which can well meet requirements of milk churning such as stable, low noise, fast, uniform, and non-foaming by adopting a new type of milk churning control strategy.

To achieve the above objetives, a stirring device according to independent claim 1 is provided. In some embodiments of the present disclosure, a stirring device applicable to containers is provided, which is detachably assembled on an opening of the container. And the stirring device includes a control module; a power module, electrically connected to the control module; and a driver module, electrically connected to the control module. Herein the driver module is provided with an output shaft and the output shaft is connected to a stirring rod that extends from the opening of the container into an interior of the container, the control module is configured to control the driver module to cycle through two rotation modes, one of the rotation modes is a forward rotation for a number of seconds or revolutions, and the other of the rotation modes is a reverse rotation for a number of seconds or revolutions.

The control module includes a forward rotation circuit, a reverse rotation circuit, and a circuit switching module electrically connected the two respectively; wherein the control module controls the driver module to perform the forward rotation after the forward rotation circuit is energized, and the control module controls the driver module to perform the reverse rotation after the reverse rotation circuit is energized; and where the circuit switching module is configured for energizing one of the forward rotation circuit and the reverse rotation circuit.

The driver module is a motor, and a current that the forward rotation circuit passes into the motor is opposite to a current that the reverse rotation circuit passes into the motor.

The control module is a control circuit board and the circuit switching module is a master switch integrated in the control circuit board.

The two rotation modes are combined as the forward rotation for 10s followed by the reverse rotation, and the reverse rotation for 10s followed by the forward rotation.

The power module is a rechargeable battery or an external power supply.

The stirring device is further provided with a charging section, a charging socket is provided in the charging section that electrically connected to the control module, and the charging section is used to charge the rechargeable battery.

The stirring device is further provided with a housing and a cover, a first cavity is provided in the housing for electronic components to be placed in, and the cover is provided on the first cavity.

The stirring rod is disposed at a bottom of the housing, and the output shaft is connected with the stirring rod after goes across the housing.

The cover is further provided with a switch section electrically connected to the control module and the switch section controls on and off of the stirring device.

With adoption of above technical solutions, the stirring device applicable to containers of the present disclosure has at least following beneficial effects and advantages. By detachable provided the stirring device at the opening of a container, and the stirring device is provided with the power module, the control module and the driver module, herein the power module provides power for the whole device, and the driver module is equipped with the output shaft, which is connected with the stirring rod that extends from the opening of the container into the interior of the container. When the driver module drives the stirring rod to rotate, the stirring rod can stir in the container, and the control module has a milk churning strategy, which can perform the forward rotation for a number of seconds or revolutions followed by the reverse rotation for a number of seconds or revolutions, and then continue the forward rotation for a number of seconds or revolutions after completing the reverse rotation, and recycle such operations again and again, which can well meet requirements of milking churning such as stable, low noise, fast, uniform, and non-foaming.

### BRIEF DESCRIPTION OF THE DRAWINGS

In order to more clearly illustrate the technical solutions in the embodiments of the present disclosure or in the existing technologies, accompanying drawings to be used in the description of the embodiments or the existing technologies will be briefly introduced below. It will be obvious that the accompanying drawings in the following description are only some of the embodiments of the present disclosure.
FIG. 1 shows a structural schematic diagram of a stirring device applicable to containers in accordance with some embodiments of the present disclosure.
FIG. 2 shows a schematic diagram of a separation state of a housing and a container of the stirring device applicable to containers in accordance with some embodiments of the present disclosure.
FIG. 3 shows an exploded view of the housing of the stirring device applicable to containers in accordance with some embodiments of the present disclosure.
FIG. 4 shows an exploded view of partial structure of the stirring device applicable to containers in accordance with some embodiments of the present disclosure.
FIG. 5 shows a structural frame of the stirring device applicable to containers in accordance with some embodiments of the present disclosure.

In the drawings, reference signs are as follows. 1. Container, 11. Spout, 12. Grip, 2. Cover, 21. Switch section, 211. Power button, 22. Charging section, 221. Charging socket, 23. Sealing frame, 24. Sealing pattern, 25. Leakage port, 3. Timer, 31. Scale, 32. Upper cover, 33. Lower cover, 331. Positioning bead, 34. Clamping piece, 341. Clamping block, 342. Fracture, 35. Locating piece, 351. Locating edge, 352. Positioning socket, 36. Locating slot, 37. Positioning rod, 4. Stirring rod, 41. First stirring section, 42. Second stirring section, 5. Power module, 6. Control circuit board, 7. Driver module, 71. Reduction gear box, 8. Sealing gasket, 9. Housing, 91. Sealing seat, 92. Sealing ring, 100. Control module, 110. Forward rotation circuit, 120. Reverse rotation circuit, 130. Circuit switching module.

### DETAILED DESCRIPTION OF THE EMBODIMENTS

The present disclosure will be described in further detail below in conjunction with the accompanying drawings.

Specific embodiments are only explanations of the present disclosure, which are not a limitation of the present disclosure, and for a person of ordinary skill in the art, may make modifications to these embodiments without creative contribution according to needs after reviewing of this specification, but as long as it is within the scope of appending claims of the present disclosure, it shall be protected by the Patent Law.

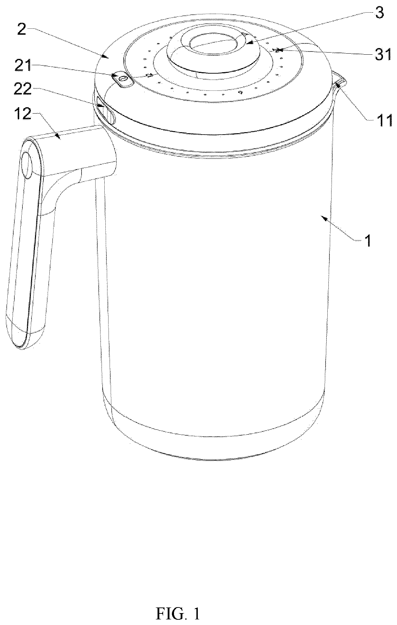

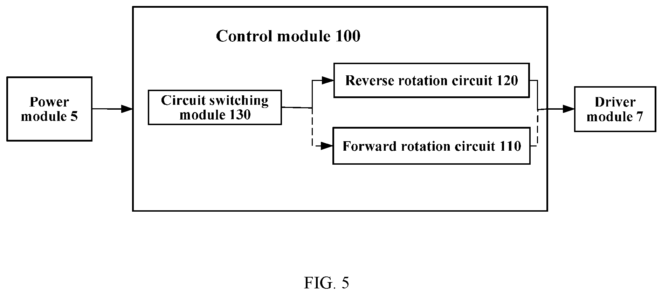

As shown in FIG. 1, FIG. 2 and FIG. 5, in some embodiments of the present disclosure, a stirring device applicable to containers 1 is provided, which includes a cover 2 and a housing 9. Herein a first cavity is provided in the housing 9 for electronic components to be placed in, an exposed hole is opened at a top of the housing 9 for the first cavity to be exposed, and the cover 2 is adapted to the exposed hole in a size. When the cover 2 is covered on the exposed hole, the cover 2 and the housing 9 form a space for the electronic components to be mounted, and the cover 2 is fixedly assembled to the housing 9 by screws or bolts. A sealing gasket 8 is provided at a seam crossing of the cover 2 and the housing 9, thereby improving the sealing of the cover 2 and the housing 9 after assembled. In some other embodiments, the cover 2 and the housing 9 are assembled by fasteners. In an example, the cover 2 and the housing 9 are integrally molded.

It is to be added that, in the stirring device of the present disclosure, that is, in the first cavity of the housing 9, it is provided with a control module 100, a power module 5, and a driver module 7. Herein the driver module 7 is provided with an output shaft, and the output shaft is connected to a stirring rod 4, one end of the stirring rod 4 is detachably assembled with the output shaft that goes across the first cavity of the housing 9 to an outside of the housing 9. When in use, the entire stirring device is assembled at an opening of a container 1, at this time the stirring rod 4 is also extended into an interior of the container 1. And when the control module 100 controls rotations of the driver module 7, the output shaft will drive the stirring rod 4 to rotate in the container 1, so as to carry out stirring in the interior of the container 1.

Preferably, the control module 100 is configured to control the driver module 7 to cycle through two rotation modes, one of the rotation modes is a forward rotation for a number of seconds or revolutions, and the other of the rotation modes is a reverse rotation for a number of seconds or revolutions. Therefore, the two rotation modes are cyclic, that is, the forward rotation for a number of seconds or revolutions followed by the reverse rotation for a number of seconds or revolutions, and the reverse rotation is completed to continue the forward rotation, and repeat such operations again and again.

It should be noted that, the control module 100 includes a forward rotation circuit 110, a reverse rotation circuit 120, and a circuit switching module 130 electrically connected the two respectively. Herein the control module 100 controls the driver module 7 to perform the forward rotation after the forward rotation circuit 110 is energized, so that the stirring rod 4 is rotated with the forward rotation in the container 1. The control module 100 controls the driver module 7 to perform the reverse rotation after the reverse rotation circuit 120 is energized, so that the stirring rod 4 is rotated with the reverse rotation in the container 1. The circuit switching module 130 is configured for energizing either of the forward rotation circuit 110 and the reverse rotation circuit 120, here an energized logic is that, the forward rotation circuit 110 is energized for 10s and stops energizing, and then the reverse rotation circuit 120 is energized for 10s, then the reverse rotation circuit 120 is energized for 10s followed by the forward rotation circuit 110 is energized for 10s again, and repeat such operations again and again.

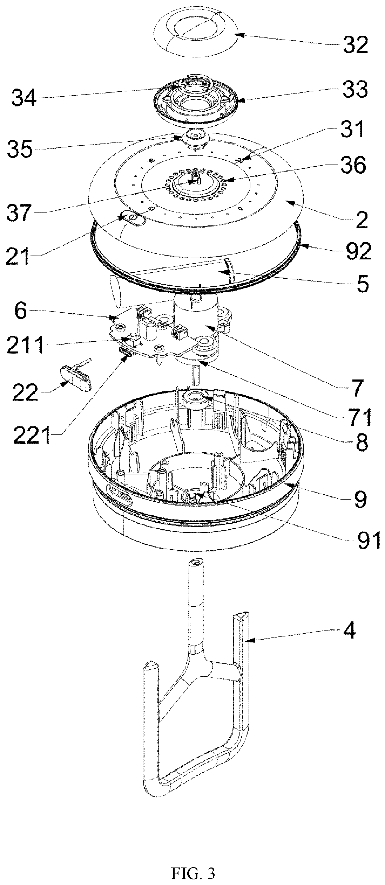

Referring to FIG. 3, the driver module 7 is a motor, and a current that the forward rotation circuit 110 passes into the motor is opposite to a current that the reverse rotation circuit 120 passes into the motor. By changing a direction of the current to control the forward rotation or the reverse rotation of the motor, so that a reorientation of the forward rotation or the reverse rotation of the motor is faster and more stable. Moreover, the output shaft of the motor is provided toward a bottom and is threaded from the first cavity of the housing 9 across the outside of the housing 9. A sealing seat 91 is provided on a threaded portion of the housing 9, and a sealing ring 92 is provided in the sealing seat 91 for the output shaft to be threaded, the sealing ring 92 cooperates with the sealing seat 91 to effectively improve the sealing of the threaded portion of the housing 9. The control module 100 is a control circuit board 6 and the circuit switching module 130 is a master switch integrated in the control circuit board 6. The power module 5 is a rechargeable battery. In some other embodiments, the power module 5 is a disposable dry battery, or the power module 5 may be an external power supply.

It is to be added that, the stirring device is further provided with a charging section 22. Specifically, the charging section 22 is provided at a side of the housing 9, a charging socket 221 is provided in the charging section 22 that electrically connected to the control module 100, by plugging a charging cable into the charging socket 221, it can be realized that the charging section 22 is used for charging the rechargeable battery.

In the embodiments, the rechargeable battery is a lithium battery, and a part of the charging section 22 is a charging hole opened on the side of the housing 9, and the other part of the charging section 22 is a silicone sealing cover, with one end of the silicone sealing cover is embedded in the side of the housing 9, and the other end of the silicone sealing cover covers the charging hole, thereby improving the sealing of the whole charging section 22. The charging socket 221 is provided on the control circuit board 6 and is arranged towards the charging hole, so as to allow the charging cable to be plugged in. the charging socket 221 is preferably a type-c interface, and may also be a USB-c interface, or a Micro USB interface.

Preferably, the cover 2 is also provided with a switch section 21 electrically connected to the control module 100, a part of the switch section 21 is a pressing section provided on the cover 2, and the other part of the switch section 21 is a power button 211 provided on the control circuit board 6, and the power button 211 is located at the bottom of the pressing section. When a user pushes the pressing section, the power button 211 is also pushed, and the stirring device can then be controlled to on or off.

It should be noted that, the container 1 applicable to the stirring device of the present disclosure has a cup-shape, an opening is provided at a top of the container 1, and the opening of the container 1 has a diameter greater than or equal to the diameter of the bottom of the container 1. A spout 11 is provided at an edge of the opening of the container 1 and the spout 11 is provided protrudingly and connected to a space inside the container 1. A grip 12 is provided at a side of the container 1, and the grip 12 facilitates the user to move the whole container 1.

Preferably, a sealing frame 23 is provided at a bottom edge of the housing 9, the diameter of the sealing frame 23 is adapted to the diameter of the opening of the container 1. When the sealing frame 23 is inserted into the opening of the container 1, the sealing frame 23 will be adhered to the inner wall of the opening of the container 1. A plurality of sealing patterns 24 are provided at the top of the sealing frame 23, the sealing patterns 24 is of a flexible material, which can be pressed against the inner side wall of the opening of the container 1 after the sealing frame 23 is inserted into the opening of the container 1, so as to further improve the sealing of the stirring device after it extended into the container 1. A leakage port 25 is provided on the side of the sealing frame 23, the leakage port 25 is set in a shape of notch on the sealing frame 23, and a size of the notch is adapted to the spout 11. After the leakage port 25 is aligned with the spout 11, the whole container 1 is tilted, at this time the liquid or powder inside the container 1 can be poured out of the container 1 through the spout 11. And when the leakage port 25 is not facing the spout 11, the whole container 1 is in an airtight state, which can effectively prevent the liquid or powder from spilling out of the opening or the spout 11 of the container 1 during the working process of the stirring device.

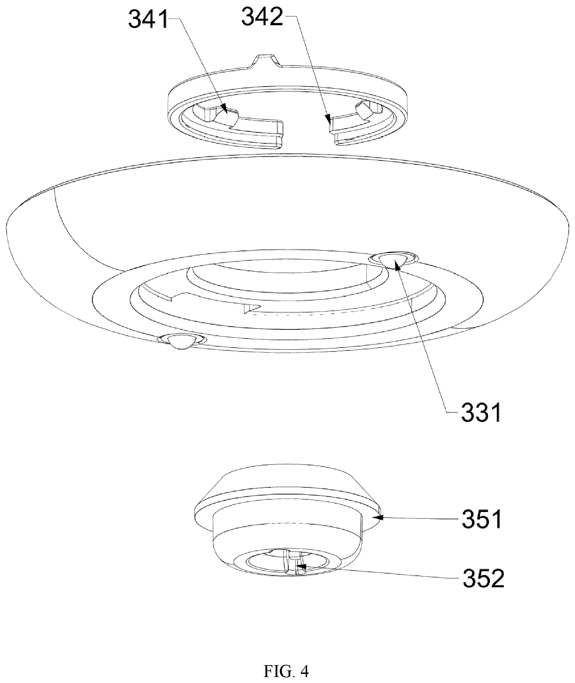

Referring to FIG. 3 and FIG. 4, a timer 3 is provided on the top of the cover 2, the timer 3 is rotationally provided on the top of the cover 2. A plurality of scales 31 are engraved on the top of the cover 2, all scales 31 form a clock-like dial plate, and each of the scales 31 corresponds to one time, the timer 3 is provided in the center of the dial plate, the timer 3 is engraved with a logo, the logo can be aligned to any of the scales 31 when the user rotates the timer 3, thus marking an arbitrary time for the user to know when the stirring device starts to run or stops to run.

It is to be added that, the timer 3 comprises an upper cover 32 and a lower cover 33, the lower cover 33 is provided with at least one positioning beads 331 at its bottom surface, and a plurality of locating slots 36 uniformly arranged in a circle are provided on a top surface of the cover 2, the locating slots 36 are used for positioning beads 331 to be stuck therein, so as to prevent the timer 3 from slipping when the timer 3 is marking the scales 31. The number of the locating slots 36 is the same as the number of the scales 31, thus each of the locating slots 36 corresponds to one time scale 31, so that the timer 3 can more accurate for the time of marking.

Preferably, a second cavity is formed between the upper cover 32 and the lower cover 33, the clamping piece 34 is sandwiched between the upper cover 32 and the lower cover 33 in the second cavity. The lower cover 33 is opened with a through hole at its bottom, and the through hole is used for insertion of the locating piece 35, then the inserted locating piece 35 is embedded in the clamping piece 34 and can be rotated relative to the locating piece 35. A positioning socket 352 is provided at the bottom of the locating piece 35, and a positioning rod 37 inserted and fixed in the positioning socket 352 is provided on the cover 2, so that when the timer 3 is rotated, the locating piece 35 cooperates with the clamping piece 34 to prevent the timer 3 from falling off and is available for the timer 3 to be rotated on the cover 2.

It is to be added that, the locating piece 35 is provided with two sections, a first section of which is used for the positioning rod 37 to be threaded, this section is the positioning socket 352, after the positioning socket 352 is inserted into the positioning rod 37, both of them are fixedly assembled without circumferential slippage, thus avoiding loosening of the two. A second section is inserted into the clamping piece 34 and then resist the clamping piece 34, preventing the locating piece 35 from falling out of the clamping piece 34, this section is provided in a form of a circular platform, and its cross-sectional area increases step by step from the top to the bottom, and the bottom of this section is provided with a cylindrical member, the cylindrical member is hollow, this hollow portion is the positioning socket 352, and the diameter of the cylindrical member is smaller than the diameter of the bottom of this section.

In the embodiments, the clamping piece 34 is a ring piece, a plurality of clamping blocks 341 is provided in an inner wall of the ring piece. The plurality of clamping blocks 341 form a second inner diameter of the ring piece at their ends, the second inner diameter is smaller than the diameter of the bottom of the second section of the locating piece 35, thereby facilitating the insertion of the locating piece 35 into the ring piece. The ring piece may deform when the locating piece 35 is inserted, thereby for the second section of the locating piece to pass throughout the clamping block 341 on the ring piece. After the second section of the locating piece 35 is embedded in the ring piece, the bottom of the second section of the locating piece 35 fits against the clamping block 341, thereby preventing the second section from disengaging from the snap of the ring piece, to allow for the upper cover 32 and the lower cover 22 of the entire timer 3 is assembled on the cover 2. Preferably, the clamping block 341 is provided with a bevel in a direction of insertion of the locating piece 35, the bevel is available for the second section of the locating piece 35 to be inserted more easily into the ring piece.

Preferably, the ring piece is provided with a fracture 342, to allow the ring piece to deform when the locating piece 35 is inserted, thereby facilitating the insertion of the locating piece 35.

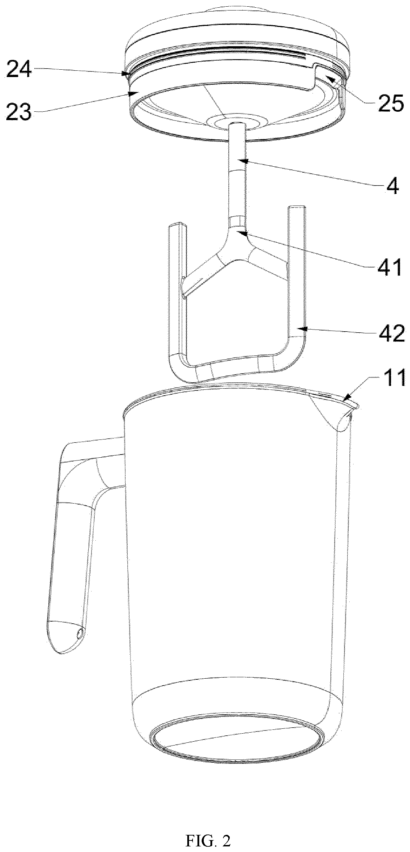

Referring to FIG. 2 and FIG. 3, the stirring rod 4 is disposed at the bottom of the output shaft, a top of the stirring rod 4 is provided with a hole, the shape of which is adapted to the output shaft for the insertion of the output shaft into the stirring rod 4. It can realize a fixed assembly of the output shaft and the stirring rod 4 after the output shaft is inserted into the stirring rod 4, and the stirring rod 4 can be driven to carry out stirring operations in the container 1 through the rotation of the output shaft. In the embodiments, the output shaft of the motor is connected to a reduction gear box 71, the output shaft of the motor is connected to an input end of the reduction gear box 71 in a transmission connection, and an output end of the reduction gear box 71 is connected to the stirring rod 4, so as to enable a rotation speed of the stirring rod 4 to be reduced, and to prevent excessive speed from leading to the breakage of the stirring rod 4.

Preferably, the stirring rod 4 is provided with a first stirring section 41 and a second stirring section 42. One end of the first stirring section 41, that is, it top, is connected to the output end of the reduction gear box 71, that is, an aperture is opened at the top of the first stirring section 41. The other end of the first stirring section 41, that is, its bottom, is provide with a plurality of forks at the bottom. Specifically, the forks are all provided towards the inner side wall of the container 1. The second stirring section 42 is provided in a form of a rod and is connected to ends of the forks, so as to make a stirring range of the stirring rod 4 inserted into the container 1 increase, and also make the stirring inside the container 1 more adequate and even.

Specifically, the first stirring section 41 is a A-shaped rotating rod, and the second stirring section 42 is a U-shaped stirring rod. A connection between a rotating rod and the stirring rod is located in a middle inner edge of the stirring rod, and the rotating rod and the stirring rod are integrally molded, and they are both made of PP or ABS.

The foregoing description is only for the purpose of illustrating the technical solutions of the present invention which defined by the appended claims.

## Claims

1. A stirring device applicable to containers, wherein the stirring device is configured to be detachably assembled on an opening of a container, and the stirring device comprising:
a control module (100);
a power module (5), electrically connected to the control module (100); and
a driver module (7), electrically connected to the control module (100); wherein the driver module (7) is provided with an output shaft and the output shaft is connected to a stirring rod (4) that is configured to extend from the opening of the container into an interior of the container, the control module (100) is configured to control the driver module (7) to cycle through two rotation modes, one of the rotation modes is a forward rotation for a number of seconds or revolutions, and the other of the rotation modes is a reverse rotation for a number of seconds or revolutions,
the stirring device is further provided with a housing (9) and a cover (2), a first cavity is provided in the housing (9) for electronic components to be placed in, and the cover (2) is provided on the first cavity,
a timer (3) is provided on the top of the cover (2), **characterized in that** the timer (3) is rotationally provided on the top of the cover (2),
a plurality of scales (31) are engraved on the top of the cover (2), all scales (31) form a clock-like dial plate, and each of the scales (31) corresponds to one time, the timer (3) is provided in the center of the dial plate, the timer (3) is engraved with a logo, the logo is configured be aligned to any of the scales (31) when the user rotates the timer (3).

2. The stirring device applicable to containers according to claim 1, **characterized in that** the control module (100) comprises a forward rotation circuit (110), a reverse rotation circuit (120), and a circuit switching module (130) electrically connected the two respectively; wherein the control module (100) controls the driver module (7) to perform the forward rotation after the forward rotation circuit (120) is energized, and the control module (100) controls the driver module (7) to perform the reverse rotation after the reverse rotation circuit (120) is energized; and wherein the circuit switching module (130) is configured for energizing one of the forward rotation circuit (100) and the reverse rotation circuit (120).

3. The stirring device applicable to containers according to claim 2, **characterized in that** the driver module (7) is a motor, and a current that the forward rotation circuit (110) passes into the motor is opposite to a current that the reverse rotation circuit (120) passes into the motor.

4. The stirring device applicable to containers according to claim 2, **characterized in that** the control module (100) is a control circuit board (6) and the circuit switching module (130) is a master switch integrated in the control circuit board (6).

5. The stirring device applicable to containers according to claim 1, **characterized in that** the two rotation modes are combined as the forward rotation for 10s followed by the reverse rotation, and the reverse rotation for 10s followed by the forward rotation.

6. The stirring device applicable to containers according to claim 1, **characterized in that** the power module (5) is a rechargeable battery or an external power supply.

7. The stirring device applicable to containers according to claim 6, **characterized in that** the stirring device is further provided with a charging section (22), a charging socket (221) is provided in the charging section (22) that electrically connected to the control module (100), and the charging section (22) is used to charge the rechargeable battery.

8. The stirring device applicable to containers according to claim 1, **characterized in that** the stirring rod (4) is disposed at a bottom of the housing (9), and the output shaft is connected with the stirring rod (4) after goes across the housing (9).

9. The stirring device applicable to containers according to claim 1, **characterized in that** the cover (2) is further provided with a switch section (21) electrically connected to the control module (100), and the switch section (21) controls on and off of the stirring device.

10. The stirring device applicable to containers according to claim 1, **characterized in that**, the timer (3) comprises an upper cover (32) and a lower cover (33), the lower cover (33) is provided with at least one positioning beads (331) at its bottom surface, and a plurality of locating slots (36) uniformly arranged in a circle are provided on a top surface of the cover (2), the locating slots (36) are used for positioning beads (331) to be stuck therein.

11. The stirring device applicable to containers according to claim 10, **characterized in that**, a second cavity is formed between the upper cover (32) and the lower cover (33), the clamping piece (34) is sandwiched between the upper cover (32) and the lower cover (33) in the second cavity;
the lower cover (33) is opened with a through hole at its bottom, and the through hole is used for insertion of the locating piece (35), then the inserted locating piece (35) is embedded in the clamping piece (34) and can be rotated relative to the locating piece (35);
a positioning socket (352) is provided at the bottom of the locating piece (35), and a positioning rod (37) inserted and fixed in the positioning socket (352) is provided on the cover (2), so that when the timer (3) is rotated, the locating piece (35) cooperates with the clamping piece (34) to prevent the timer (3) from falling off and is available for the timer (3) to be rotated on the cover (2).

12. The stirring device applicable to containers according to claim 11, **characterized in that**, the locating piece (35) is further provided with a locating edge (351), the locating edge (351) is provided in a form of a circular platform, and its cross-sectional area increases step by step from the top to the bottom, and a bottom of the circular platform is provided with a cylindrical member, and the diameter of the cylindrical member is smaller than the diameter of the bottom of the circular platform, the cylindrical member is hollow and formed as the positioning socket (352); the locating edge (351) is inserted into the through hole and then resist the clamping piece (34), preventing the locating piece (35) from falling out of the clamping piece (34).

13. The stirring device applicable to containers according to claim 12, **characterized in that**, the clamping piece (34) is a ring piece, a plurality of clamping blocks (341) is provided in an inner wall of the ring piece, the plurality of clamping blocks (341) form a second inner diameter of the ring piece at their ends, the second inner diameter is smaller than the diameter of the cylindrical member of the locating edge (351), thereby facilitating the insertion of the locating piece (35) into the ring piece;
the ring piece deforms when the locating piece (35) is inserted, thereby for the locating edge (351) to pass throughout the clamping block (341) on the ring piece; after the locating edge (351) is embedded in the ring piece, the cylindrical member of the locating edge (351) fits against the clamping block (341), thereby preventing the locating edge (351) from disengaging from the ring piece, to allow for the upper cover (32) and the lower cover (22) of the entire timer (3) is assembled on the cover (2).

## Patentansprüche

1. Eine Rühreinrichtung für Behälter, wobei die Rühreinrichtung auf einer Öffnung eines Behälters lösbar montiert ist, und wobei die Rühreinrichtung umfasst:
ein Steuermodul (100);
ein elektrisch mit dem Steuermodul (100) verbundenes Leistungsmodul (5); und
ein mit dem Steuermodul (100) elektrisch verbundenes Treibermodul (7); wobei das Treibermodul (7) mit einer Ausgangswelle versehen ist und die Ausgangswelle mit einer Rührstange (4) verbunden ist, die ausgebildet ist, sich von der Öffnung des Behälters in ein Inneres des Behälters zu erstrecken, das Steuermodul (100) ausgebildet ist, um das Treibermodul (7) zu steuern, um zwei Drehmodi zu durchlaufen, eine der Drehmodi ist eine Vorwärtsdrehung für eine Anzahl von Sekunden oder Umdrehungen und die andere der Drehmodi ist eine Umkehrdrehung für eine Anzahl von Sekunden oder Umdrehungen,
die Rühreinrichtung ferner mit einem Gehäuse (9) und einem Deckel (2) versehen ist, ein erster Hohlraum im Gehäuse (9) für die Einsetzung elektronischer Bauteile vorgesehen ist und der Deckel (2) an dem ersten Hohlraum vorgesehen ist,
an der Oberseite des Deckels (2) ein Timer (3) vorgesehen ist, **dadurch gekennzeichnet, dass** der Timer (3) an der Oberseite des Deckels (2) drehbar vorgesehen ist,
eine Mehrzahl von Waagen (31) auf der Oberseite des Deckels (2) graviert sind, alle Waagen (31) bilden einem uhrartigen Zifferblatte, und jede der Waagen (31) entspricht einem Zeitpunkt, der Timer (3) ist in der Mitte dem Zifferblatte vorgesehen, der Timer (3) ist mit einem Logo graviert, das Logo ist konfiguriert, auf eine der Waagen (31) ausgerichtet zu sein, wenn der Benutzer den Timer (3) dreht.

2. Die Rühreinrichtung für Behälter nach Anspruch 1, **dadurch gekennzeichnet, dass** das Steuermodul (100) einen Vorwärtsdrehkreis (110), einen Umkehrdrehkreis (120) und ein Schaltkreismodul (130) , das die beiden jeweils elektrisch verbunden, umfasst; wobei das Steuermodul (100) das Treibermodul (7) steuert, um die Vorwärtsdrehung durchzuführen, nachdem der Vorwärtsdrehkreis (110) angesteuert ist, und das Steuermodul (100) das Treibermodul (7) steuert, um die Umkehrdrehung durchzuführen, nachdem der Umkehrdrehkreis (120) angesteuert ist; und das Schaltkreismodul (130) dazu ausgebildet ist, eine der Vorwärtsdrehschaltung (100) und die Umkehrdrehschaltung (120) zu versorgen.

3. Die Rühreinrichtung für Behälter nach Anspruch 2, **dadurch gekennzeichnet, dass** das Treibermodul (7) ein Motor ist und ein Strom, den der Vorwärtsdrehkreis (110) in den Motor leitet, einem Strom gegenübersteht, den der Umkehrdrehkreis (120) in den Motor leitet.

4. Die Rühreinrichtung für Behälter nach Anspruch 2, **dadurch gekennzeichnet, dass** das Steuermodul (100) eine Steuerplatte (6) ist und das Schaltkreismodul (130) ein in die Steuerplatte (6) integrierter Hauptschalter ist.

5. Die Rühreinrichtung für Behälter nach Anspruch 1, **dadurch gekennzeichnet, dass** die beiden Drehmodi als die Vorwärtsdrehung für 10s gefolgt von der Umkehrdrehung und die Umkehrdrehung für 10s gefolgt von der Vorwärtsdrehung kombiniert sind.

6. Die Rühreinrichtung für Behälter gemäß Anspruch 1 für Behälter, **dadurch gekennzeichnet, dass** das Leistungsmodul (5) eine wiederaufladbare Batterie oder eine externe Stromversorgung ist.

7. Die Rühreinrichtung für Behälter nach Anspruch 6, **dadurch gekennzeichnet, dass** die Rühreinrichtung ferner mit einem Ladeabschnitt (22) versehen ist, im Ladeabschnitt (22) eine elektrisch mit dem Steuermodul (100) verbundene Ladebuchse (221) vorgesehen ist und der Ladeabschnitt (22) zum Laden der wiederaufladbaren Batterie verwendet wird.

8. Die Rühreinrichtung für Behälter nach Anspruch 1, **dadurch gekennzeichnet, dass** die Rührstange (4) an einem Boden des Gehäuses (9) angeordnet ist und die Ausgangswelle nach dem Durchlaufen des Gehäuses (9) mit der Rührstange (4) verbunden ist.

9. Die Rühreinrichtung für Behälter nach Anspruch 1, **dadurch gekennzeichnet, dass** der Deckel (2) ferner mit einem mit dem Steuermodul (100) elektrisch verbundenen Schalterabschnitt (21) versehen ist und der Schalterabschnitt (21) die Rühreinrichtung an und aus steuert.

10. Die Rühreinrichtung für Behälter nach Anspruch 1, **dadurch gekennzeichnet, dass** der Timer (3) einen oberen Abdeckel (32) und einen unteren Abdeckel (33) aufweist, der untere Abdeckel (33) an seiner Bodenfläche mit mindestens einem Positionierwulst (331) versehen ist und mehrere kreisförmig gleichmäßig angeordnete Positionierschlitze (36) an einer Oberfläche des Abdeckels (2) vorgesehen sind, die Positionierschlitze (36) zum Positionieren von darin aufklebendem Wulsten (331) dienen.

11. Die Rühreinrichtung für Behälter nach Anspruch 10, **dadurch gekennzeichnet, dass** zwischen dem oberen Deckel (32) und dem unteren Deckel (33) ein zweiter Hohlraum ausgebildet ist, das Klemmstück (34) zwischen dem oberen Deckel (32) und dem unteren Deckel (33) in den zweiten Hohlraum sandwicht ist;
der untere Deckel (33) mit einem Durchgangsloch an seinem Boden geöffnet wird und das Durchgangsloch zum Einsetzen des Lagerstücks (35) verwendet wird, dann ist das eingesetzte Lagerstück (35) in das Klemmstück (34) eingebettet und relativ zum Lagerstück (35) verdrehbar;
ein Positionsloch (352) ist am Boden des Lagerstücks (35) vorgesehen, und eine in das Positionsloch (352) eingesetzte und befestigte Positionierstange (37) ist am Deckel (2) vorgesehen, so dass beim Drehen des Timers (3) das Lagerstück (35) mit dem Klemmstück (34) zusammenwirkt, um zu verhindern, dass der Timer (3) abfällt, und für die Drehung des Timers (3) am Deckel (2) verfügbar ist.

12. Die Rühreinrichtung für Behälter nach Anspruch 11, **dadurch gekennzeichnet, dass** das Lagerstück (35) ferner mit einer Lagerkante (351) versehen ist, die Lagerkante (351) in Form einer kreisförmigen Plattform ausgebildet ist, deren Querschnittsfläche sich schrittweise von oben nach unten vergrößert, und ein Boden der kreisförmigen Plattform mit einem zylindrischen Element versehen ist, und der Durchmesser des zylindrischen Elements kleiner ist als der Durchmesser des Bodens der kreisförmigen Plattform, das zylindrische Element ist hohl und als Positionsloch (352) ausgebildet; die Lagerkante (351) in das Durchgangsloch eingesetzt wird und dann dem Klemmstück (34) widersteht, wodurch verhindert wird, dass das Lagerstück (35) aus dem Klemmstück (34) herausfällt.

13. Die Rühreinrichtung für Behälter nach Anspruch 12, **dadurch gekennzeichnet, dass** das Klemmstück (34) ein Ringstück ist, mehrere Klemmblöcke (341) in einer Innenwand des Ringstücks vorgesehen sind, die mehreren Klemmblöcke (341) an ihren Enden einen zweiten Innendurchmesser des Ringstücks bilden, der zweite Innendurchmesser kleiner ist als der Durchmesser des zylindrischen Teils der Lagerkante (351), wodurch das Einführen des Lagerstücks (35) in das Ringstück erleichtert wird;
das Ringstück verformt sich beim Einsetzen des Lagerstücks (35), wodurch die Lagerkante (351) durch den Klemmblock (341) am Ringstück hindurchgeht; nachdem die Lagerkante (351) in das Ringstück eingebettet ist, passt das zylindrische Element der Lagerkante (351) an den Klemmblock (341) an, wodurch verhindert wird, dass die Lagerkante (351) sich vom Ringstück löst, so dass der obere Deckel (32) und der untere Deckel (22) des gesamten Timers (3) auf den Deckel (2) montiert werden können.

## Revendications

1. Un dispositif d'agitation applicable aux récipients, dans lequel le dispositif d'agitation est configuré pour être assemblé de manière amovible sur une ouverture d'un récipient, et que le dispositif d'agitation comprend :
un module de commande (100) ;
un module d'alimentation (5), connecté électriquement au module de commande (100) ; et
un module d'entraînement (7), connecté électriquement au module de commande (100); dans lequel le module d'entraînement (7) est muni d'un arbre de sortie, et que l'arbre de sortie est relié à une tige d'agitation (4) qui est configurée pour s'étendre depuis l'ouverture du récipient dans un intérieur du récipient, le module de commande (100) est configuré pour commander le module d'entraînement (7) pour faire circuler deux modes de rotation, l'un des modes de rotation est une rotation vers l'avant pendant un certain nombre de secondes ou de tours, et l'autre des modes de rotation est une rotation inverse pendant un nombre de secondes ou de tours,
le dispositif d'agitation est en outre pourvu d'un boîtier (9) et d'un couvercle (2), une première cavité est prévue dans le boîtier (9) pour placer des composants électroniques, et le couvercle (2) est prévu sur la première cavité,
un minuteur (3) est prévu en haut du couvercle (2), **caractérisé en ce que** le minuteur (3) est prévu en rotation en haut du couvercle (2),
une pluralité d'échelles (31) sont gravées en haut du couvercle (2), toutes les échelles (31) forment un cadran horloger, et chacune des échelles (31) correspond à un temps, le minuteur (3) est prévu au centre du cadran, le minuteur (3) est gravé avec un logo, le logo est configuré pour être aligné sur l'une quelconque des échelles (31) lorsque l'utilisateur tourne le minuteur (3).

2. Le dispositif d'agitation applicable aux récipients selon la revendication 1, **caractérisé en ce que** le module de commande (100) comprend un circuit de rotation avant (110), un circuit de rotation arrière (120), et un module de commutation de circuit (130) connecté électriquement les deux respectivement ; dans lequel le module de commande (100) commande le module d'entraînement (7) à effectuer la rotation avant après que le circuit de rotation avant (110) est alimenté, et le module de commande (100) commande le module d'entraînement (7) à effectuer la rotation arrière après que le circuit de rotation arrière (120) est alimenté ; et dans lequel le module de commutation de circuit (130) est configuré pour alimenter l'un des circuit de rotation avant (100) et le circuit de rotation arrière (120).

3. Le dispositif d'agitation applicable aux récipients selon la revendication 2, **caractérisé en ce que** le module d'entraînement (7) est un moteur, et un courant qui passe dans le moteur via le circuit de rotation avant (110) est opposé à un courant qui passe dans le moteur via le circuit de rotation arrière (120).

4. Le dispositif d'agitation applicable aux récipients selon la revendication 2, **caractérisé en ce que** le module de commande (100) est une carte de circuit de commande (6) et le module de commutation de circuit (130) est un interrupteur principal intégré dans la carte de circuit de commande (6).

5. Le dispositif d'agitation applicable aux récipients selon la revendication 1, **caractérisé en ce que** les deux modes de rotation sont combinés comme une rotation avant pendant 10 secondes suivie d'une rotation inverse, et une rotation inverse pendant 10 secondes suivie d'une rotation avant.

6. Le dispositif d'agitation applicable aux récipients selon la revendication 1, **caractérisé en ce que** le module d'alimentation (5) est une batterie rechargeable ou une alimentation externe.

7. Le dispositif d'agitation applicable aux récipients selon la revendication 6, **caractérisé en ce que** le dispositif d'agitation est en outre muni d'une section de charge (22), d'une prise de charge (221) est prévue dans la section de charge (22) reliée électriquement au module de commande (100), et que la section de charge (22) est utilisée pour charger la batterie rechargeable.

8. Le dispositif d'agitation applicable aux récipients selon la revendication 1, **caractérisé en ce que** la tige d'agitation (4) est disposée au fond du boîtier (9) et que l'arbre de sortie est relié à la tige d'agitation (4) après avoir traversé le boîtier (9).

9. Le dispositif d'agitation applicable aux récipients selon la revendication 1, **caractérisé en ce que** le couvercle (2) est en outre muni d'une section d'interruption (21) reliée électriquement au module de commande (100), et que la section d'interruption (21) commande l'allumage et l'arrêt du dispositif d'agitation.

10. Le dispositif d'agitation applicable aux récipients selon la revendication 1, **caractérisé en ce que** le minuteur (3) comprend un couvercle supérieur (32) et un couvercle inférieur (33), le couvercle inférieur (33) est pourvu d'au moins un billon de positionnement (331) à sa surface inférieure, et une pluralité de fentes de positionnement (36) disposées uniformément en cercle sont prévues sur une surface supérieure du couvercle (2), les fentes de positionnement (36) étant utilisées pour billon de positionnement (331) à y coller.

11. Le dispositif d'agitation applicable aux récipients selon la revendication 10, **caractérisé en ce qu'**une deuxième cavité est formée entre le couvercle supérieur (32) et le couvercle inférieur (33), la pièce de serrage (34) est sandwichée entre le couvercle supérieur (32) et le couvercle inférieur (33) dans la deuxième cavité ;
le couvercle inférieur (33) est ouvert avec un trou traversant en son fond, et le trou traversant est utilisé pour l'insertion de la pièce de positionnement (35), puis la pièce de localisation (35) insérée est incrustée dans la pièce de serrage (34) et peut être tournée par rapport à la pièce de localisation (35) ;
un trou de positionnement (352) est prévu au fond de la pièce de positionnement (35), et une tige de positionnement (37) insérée et fixée dans le trou de positionnement (352) est prévue sur le couvercle (2), de sorte que lorsque le minuteur (3) est tourné, la pièce de positionnement (35) coopère avec la pièce de serrage (34) pour empêcher la chute du minuteur (3) et est disponible pour que le minuteur (3) soit tourné sur le couvercle (2).

12. Le dispositif d'agitation applicable aux récipients selon la revendication 11, **caractérisé en ce que** la pièce de localisation (35) est en outre munie d'un bord de localisation (351), le bord de localisation (351) est prévu sous forme de plateforme circulaire, et sa section transversale augmente pas à pas du haut au bas, et un fond de la plateforme circulaire est muni d'un organe cylindrique, et le diamètre de l'organe cylindrique est inférieur au diamètre du fond de la plateforme circulaire, l'organe cylindrique est creux et formé comme le trou de positionnement (352); le bord de localisation (351) est inséré dans le trou traversant et résiste ensuite à la pièce de serrage (34), empêchant la pièce de localisation (35) de tomber hors de la pièce de serrage (34).

13. Le dispositif d'agitation applicable aux récipients selon la revendication 12, **caractérisé en ce que** la pièce de serrage (34) est une pièce annulaire, une pluralité de blocs de serrage (341) est prévue dans une paroi interne de la pièce annulaire, la pluralité de blocs de serrage (341) forment un deuxième diamètre intérieur de la pièce annulaire à leurs extrémités, le deuxième diamètre intérieur est inférieur au diamètre de l'organe cylindrique du bord de localisation (351), facilitant ainsi l'insertion de la pièce de localisation (35) dans la pièce annulaire;
la pièce annulaire se déforme lors de l'insertion de la pièce de localisation (35), de sorte que le bord de localisation (351) passe à travers le bloc de serrage (341) sur la pièce annulaire; une fois que le bord de localisation (351) a été incrusté dans la pièce annulaire, l'organe cylindrique du bord de localisation (351) s'accorde avec le bloc de serrage (341), empêchant ainsi le débrayage du bord de localisation (351) de la pièce annulaire, pour permettre l'assemblage sur le couvercle (2) du couvercle supérieur (32) et du couvercle inférieur (22) de l'ensemble du minuteur (3).
